# EUROPEAN PATENT APPLICATION

(11) **EP 2 998 703 A1**
(43) Date of publication of application: **23.03.2016**
(21) Application number: 14797750.8
(22) Date of filing: 30.04.2014
(51) Int. Cl.: G01C 19/00, H04M 1/00, H04M 1/725

(54) **OFFSET ESTIMATION DEVICE, OFFSET ESTIMATION METHOD, AND PROGRAM**

(30) Priority: 15.05.2013 JP 2013103273
(71) Applicant: Asahi Kasei Kabushiki Kaisha, Chiyoda-ku Tokyo 101-8101 (JP)
(72) Inventor: KONDA, Masahiro, Chiyoda-ku, Tokyo 101-8101 (JP); MASUDA, Tsuyoshi, Chiyoda-ku, Tokyo 101-8101 (JP); KOBAYASHI, Shiro, Chiyoda-ku, Tokyo 101-8101 (JP)
(74) Representative: Hoffmann Eitle
(86) International application number: PCT/JP2014/002380
(87) International publication number: WO 2014/185027

(57) **Abstract**

To quickly and accurately measure offset of an angular velocity sensor mounted in a mobile device, provided is an offset estimation apparatus including an acquiring section that acquires an output signal of an angular velocity sensor mounted in a mobile device; an offset estimating section that estimates an offset of the angular velocity sensor based on a first AC component included in the output signal of the angular velocity sensor in a period during which a level of the first AC component cycles; a hold state judging section that judges a hold state of the mobile device; and a control section that controls whether the offset estimating section estimates the offset of the angular velocity sensor, according to a judgment result of the hold state judging section.

## Description

### 1. TECHNICAL FIELD

The present invention relates to an offset estimation apparatus, an offset estimation method, and a computer readable medium.

### 2. RELATED ART

Conventionally, an angle sensor that comprehends the displacement amount (angle) of a rotating system or an angular velocity sensor that comprehends the displacement velocity (angular velocity) of a rotating system measures the offset of the sensor in a state where the rotation of the rotating system is stopped, and performs an offset correction corresponding to this measured offset, as shown in Patent Documents 1 and 2, for example.
Patent Document 1: Japanese Patent Application Publication No. H9-152338
Patent Document 2: Japanese Patent Application Publication No. 2004-212382

For example, in a mobile device apparatus or the like where an angular velocity sensor is mounted, when performing the offset correction described above, the offset of the angular velocity sensor is measured after the mobile device apparatus has stopped moving. However, in a case where the mobile device apparatus is being held by a user, there is a long wait time until the mobile device apparatus stops moving, and therefore the offset measurement takes a long time. Furthermore, when the offset of the angular velocity sensor changes over time, it is difficult to periodically measure and correct the offset due to the extended time needed for the offset measurement, and the measurement accuracy of the angular velocity sensor decreases.

### SUMMARY

According to a first aspect of the present invention, provided is an offset estimation apparatus including an acquiring section that acquires an output signal of an angular velocity sensor mounted in a mobile device; an offset estimating section that estimates an offset of the angular velocity sensor based on a first AC component included in the output signal of the angular velocity sensor in a period during which a level of the first AC component cycles; a hold state judging section that judges a hold state of the mobile device; and a control section that controls whether the offset estimating section estimates the offset of the angular velocity sensor, according to a judgment result of the hold state judging section. Also provided is an offset estimation method and a program.

The summary clause does not necessarily describe all necessary features of the embodiments of the present invention. The present invention may also be a subcombination of the features described above.

### BRIEF DESCRIPTION OF THE DRAWINGS

Fig. 1 shows an example of a mobile device 10 according to an embodiment of the present invention.
Fig. 2 shows an exemplary configuration of an offset estimation apparatus 100 according to the present embodiment.
Fig. 3 shows an operational flow of the offset estimation apparatus 100 according to the present embodiment.
Fig. 4 shows an example of the output signals of the sensors 110 of the mobile device according to the present embodiment.
Fig. 5 shows an example in which the time integration is performed on the output signal of an angular velocity sensor 112 of the mobile device 10 according to the present embodiment.
Fig. 6 shows a first modification of the offset estimation apparatus 100 according to the present embodiment.
Fig. 7 shows a second modification of the offset estimation apparatus 100 according to the present embodiment.
Fig. 8 shows an example of a hardware configuration of a computer 1900 functioning as the offset estimation apparatus 100 according to the present embodiment.

### DESCRIPTION OF EXEMPLARY EMBODIMENTS

Hereinafter, some embodiments of the present invention will be described. The embodiments do not limit the invention according to the claims, and all the combinations of the features described in the embodiments are not necessarily essential to means provided by aspects of the invention.

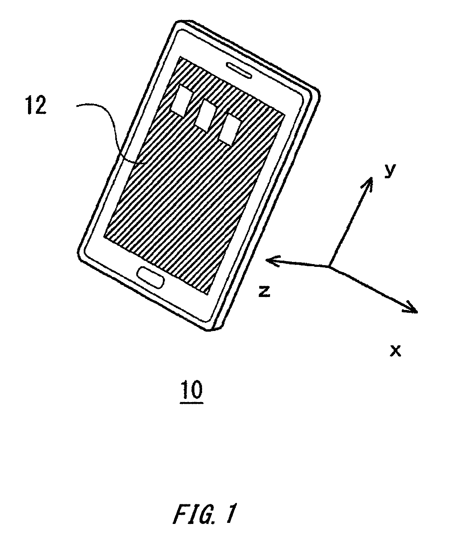

Fig. 1 shows an example of a mobile device 10 according to an embodiment of the present invention. The mobile device 10 has a plurality of sensors mounted therein, which detect the movement, hold state, position, and the like of this mobile device 10. Furthermore, the mobile device 10 performs a self-diagnostic or a calibration of each sensor to improve the detection sensitivity, for example.

The mobile device 10 has a communication function for connecting to the internet, an external device, or the like, and a data processing function for executing a program, for example. The mobile device 10 is a smartphone, a mobile phone, a tablet PC (Personal Computer), a mobile GPS device, a miniature PC, or the like, for example. The mobile device 10 includes a display section 12.

The display section 12 displays a screen for manipulating Internet web pages, electronic mail, maps, or document, audio, video, or image data, according to instructions from a user, for example. Furthermore, the display section 12 is a touch panel display into which the user instructions are input, for example, and the user instructions are input to a manipulation screen of software such as a browser by touch input from the user. Instead, the mobile device 10 may receive the user instructions through gesture input. As another example, the mobile device 10 may receive the user instructions through an input device such as a keyboard, mouse, and/or joystick.

The mobile device 10 according to the present embodiment is an example in which the plane parallel to the display surface of the display section 12 is the xy plane and the direction perpendicular to this display surface is the z axis. The mobile device 10 of the present embodiment is an example in which the display section 12 has a rectangular shape that is long in a vertical direction. Among the edges facing each other in the two types of rectangular shapes shown, the direction along the short edges (horizontal direction) is the x axis and the direction along the long edges (vertical direction) is the y axis.

In other words, in this example, when the display section 12 is viewed while the mobile device 10 is held in a hand of the user, the horizontal direction is substantially parallel to the x axis and the vertical direction that follows the standing direction of the user is substantially parallel to the yz plane. In this case, when the user uses the mobile device 10 as a telephone and places the mobile device 10 by an ear to converse, the progression direction in which the user is proceeding and the xy plane are substantially parallel, and the direction perpendicular to this progression direction is substantially parallel to the z axis. Furthermore, when the user is swinging their right arm back and forth while walking and holding the mobile device 10 in the right hand, the progression direction of the user and the swinging direction of the arm are substantially parallel to the xy plane, and the horizontal direction is substantially parallel to the z axis.

The mobile device 10 according to this embodiment has angular velocity sensors mounted therein and includes an offset estimation apparatus that measures the offset of these angular velocity sensors. The present embodiment describes an example in which the mobile device 10 includes three angular velocity sensors that respectively have the x axis, y axis, and z axis, which are orthogonal to each other, as their rotational axis directions. The offset estimation apparatus estimates the offset of each of these angular velocity sensors according to the state in which the user is holding the mobile device 10.

For example, in a state where the user is holding the mobile device 10 in a hand, a state where the mobile device 10 is put into a pocket, or the like, the surrounding temperature of the angular velocity sensors may change due to the body heat of the user. Furthermore, there are cases where the surrounding temperature of the angular velocity sensors in the mobile device 10 changes due to the execution of a processing operation that places a load on the CPU, such as video playback. There are cases where an angular velocity sensor changes the offset value according to a change in environment, such as temperature change. Therefore, the offset estimation apparatus of the present embodiment estimates the offset periodically or at predetermined times, for example, to prevent a decrease in the accuracy of the angular velocity sensors caused by change over time of the offset.

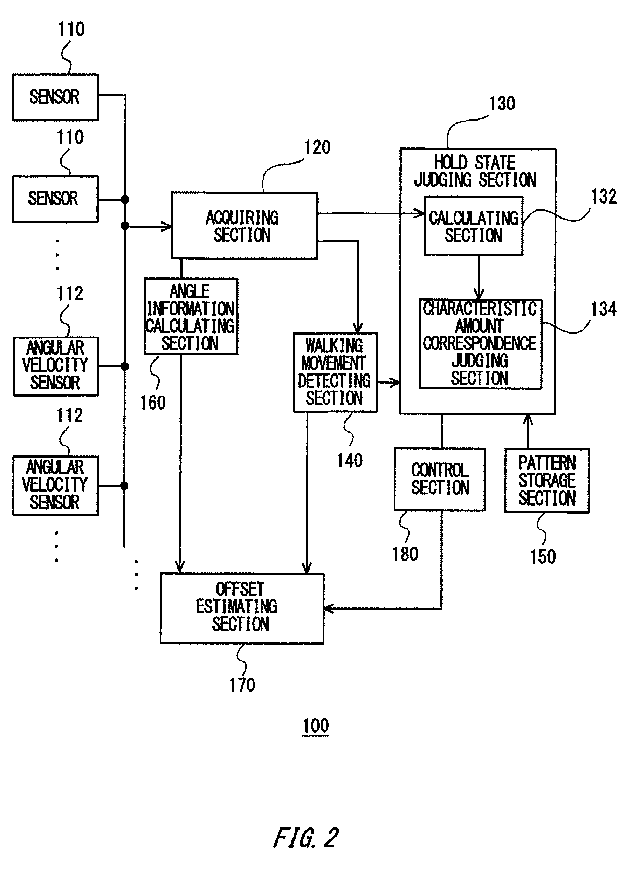

Fig. 2 shows an exemplary configuration of an offset estimation apparatus 100 according to the present embodiment. The offset estimation apparatus 100 estimates the offset of the angular velocity sensors housed in the mobile device 10, based on the output of sensors housed in the mobile device 10 being held by a user while walking. The offset estimation apparatus 100 includes an acquiring section 120 that acquires signals from the sensors 110, a hold state judging section 130, a walking movement detecting section 140, a pattern storage section 150, an angle information calculating section 160, an offset estimating section 170, and a control section 180.

The sensors 110 are mounted in the mobile device 10. The sensors 110 include the angular velocity sensors 112. Furthermore, the sensors 110 may include acceleration sensors and/or geomagnetic sensors. The sensors 110 output detection results for each of acceleration, angular velocity, geomagnetism, and the like.

A plurality of the angular velocity sensors 112 are mounted according to the plurality of rotational axes of the mobile device 10, for example. The angular velocity sensors 112 include one of or a combination of an optical gyro sensor that uses the Sagnac effect, a vibrational gyro sensor that uses the Coriolis force, a fluid gyro sensor, and a mechanical gyro sensor that uses the law of conservation of angular momentum. The angular velocity sensors 112 may be devices formed by MEMS (Micro Electro Mechanical System) techniques.

The acquiring section 120 is connected to the plurality of sensors 110, and acquires the output signals from the sensors 110. The acquiring section 120 acquires output signals from the sensors 110 corresponding to the hold state of the mobile device 10, which is moving or still. When the user is holding the mobile device 10 and walking, for example, the acquiring section 120 acquires the output signals corresponding to the movement of the mobile device 10 that accompanies the walking of the user from the sensors 110. The acquiring section 120 transmits the acquired output signals to the hold state judging section 130, the walking movement detecting section 140, and the angle information calculating section 160.

The hold state judging section 130 is connected to the acquiring section 120 and judges the hold state of the mobile device 10. The hold state judging section 130 judges the hold state of the mobile device 10 based on a change pattern of the output signals from the sensors 110, for example. In this case, the hold state judging section 130 compares a change pattern of the output signals that accompanies walking of the user stored in advance to the output signals from the sensor 110, to determine the hold state of the mobile device 10.

The present embodiment focuses on an example in which the hold state judging section 130 compares a plurality of reference characteristic amounts calculated in advance by performing a predetermined computation on the output signals corresponding to a plurality of hold states to characteristic amounts obtained by performing the same type of computation as the predetermined calculation on the output signals of the sensors 110, and judges the hold state of the mobile device 10 according to which reference characteristic amounts the output signals of the sensors 110 correspond to. The hold state judging section 130 includes a calculating section 132 and a characteristic amount correspondence judging section 134.

The calculating section 132 receives the output signals of the sensors 110 and calculates a characteristic amount that includes at least an average or a variance for at least a portion of the plurality of axial direction components included in the output signals. Specifically, the calculating section 132 performs weighting on the average and variance of the axial direction components included in the output signals with a predetermined weighting coefficient, and calculates the characteristic amount as the first-order linear combination of these values. The weighting coefficient used here is preferably a result obtained by performing a principal component analysis on at least one of the average and the variance of a plurality of axial direction components included in the output signals sampled in advance for each of the hold states.

The characteristic amount correspondence judging section 134 judges the hold state of the mobile device 10 according to the characteristic amount calculated by the calculating section 132 and the reference characteristic amount calculated in advance. For example, the characteristic amount correspondence judging section 134 judges the hold state of the mobile device 10 based on which range of a plurality of distributions grouped according to each of a plurality of hold states of the mobile device 10 the characteristic amount calculated by the calculating section 132 is in. The characteristic amount correspondence judging section 134 transmits the result of this determination to the control section 180.

The walking movement detecting section 140 is connected to the acquiring section 120 and detects the walking movement of the user holding the mobile device 10, according to the output signals of the sensors 110 received from the acquiring section 120. As an example, the walking movement detecting section 140 detects whether the user is in a walking state. The walking movement detecting section 140 is connected to the hold state judging section 130 and transmits the result of this determination to the hold state judging section 130.

The pattern storage section 150 stores information indicating the characteristics of patterns of the output signals, for each of the plurality of hold states of the mobile device 10. For example, the pattern storage section 150 stores a plurality of reference characteristic amounts calculated in advance by performing a predetermined computation on the output signals corresponding to the hold states. Instead of or in addition to this, the pattern storage section 150 may store patterns of the output signals. Furthermore, instead of or in addition to this, the pattern storage section 150 may stores results obtained by analyzing the characteristics of the patterns of the output signals.

The angle information calculating section 160 is connected to the acquiring section 120 and calculates angle information from the output signals of the angular velocity sensors 112 received from the acquiring section 120. The angle information calculating section 160 calculates the angle information by performing a time integration on the output signals of the angular velocity sensors 112. The angle information calculating section 160 transmits the calculated angle information to the offset estimating section 170.

The offset estimating section 170 is connected to the angle information calculating section 160 and estimates the offset of an angular velocity sensor 112 according to change in the angle information during a period in which there is a periodic change pattern, within the angle information calculated by the angle information calculating section 160. In a case where a plurality of angular velocity sensors 112 are provided according to the plurality of rotational axes of the mobile device 10, the offset estimating section 170 estimates the offset of at least one of the angular velocity sensors 112.

The offset estimating section 170 is connected to the walking movement detecting section 140 and switches whether the offset of an angular velocity sensor 112 is estimated, according to the detection result of the walking movement detecting section 140. For example, when the user is not walking, the offset estimating section 170 does not estimate the offset of the angular velocity sensor 112.

The control section 180 controls whether the offset of the angular velocity sensor 112 is estimated by the offset estimating section 170, according to the judgment result of the hold state judging section 130. Specifically, the control section 180 is connected between the hold state judging section 130 and the offset estimating section 170, and causes the offset estimating section 170 to estimate the offset of the angular velocity sensor 112 according to the judgment result of the hold state judging section 130.

The offset estimation apparatus 100 of the present embodiment described above first judges the hold state of the mobile device 10 possessed by the user in a walking state to be one hold state from among a plurality of predetermined categories. For example, the hold state judging section 130 includes a state in which the user is walking and holding the mobile device 10 in a hand while manipulating or viewing the mobile device 10, a state in which the mobile device 10 is held to the ear during a conversation, a state in which the mobile device 10 is held in a hand while the arm is swinging, a state in which the mobile device 10 is held in a pocket, and a state in which the mobile device 10 is held in a bag as the categories of the hold state of the mobile device 10. The offset estimation apparatus 100 measures the offset of the angular velocity sensor 112 according to the hold state judged by the hold state judging section 130.

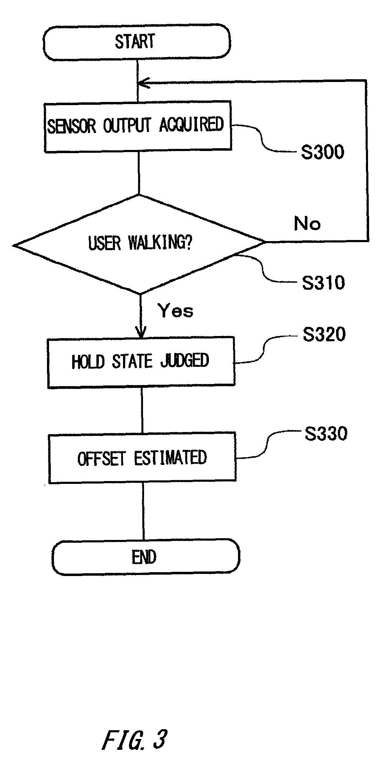

Fig. 3 shows an operational flow of the offset estimation apparatus 100 according to the present embodiment. The offset estimation apparatus 100 estimates the offset of an angular velocity sensors 112 mounted in the mobile device 10 possessed by the user while walking, by performing the operational flow shown in Fig. 3.

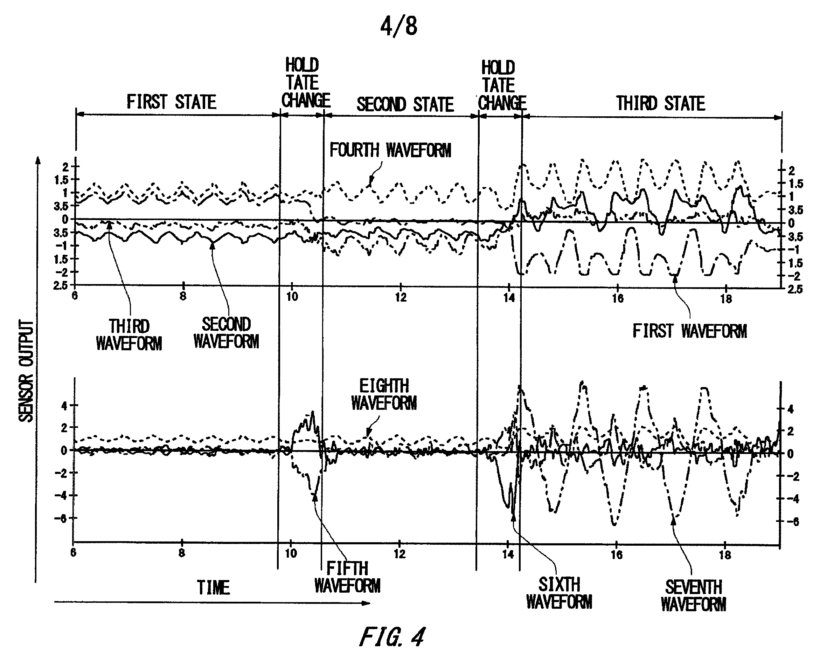

First, the acquiring section 120 acquires the output signals of the plurality of sensors 110 (S300). The present embodiment describes an example in which the sensors 110 include a total of six sensors including accelerations sensors that respectively detect acceleration in the x, y, and z directions that are orthogonal to each other and angular velocity sensors 112 that respectively detect the angular velocity in the x, y, and z directions. Fig. 4 shows an example of the output signals of the sensors 110 according to the present embodiment.

In Fig. 4, the horizontal axis indicates time and the vertical axis indicates the output intensity of each sensor. For example, the first, second, and third waveforms respectively indicate the output intensities of the acceleration sensors detecting the acceleration in the x, y, and z directions. Furthermore, the fourth waveform indicates a composite waveform including the first, second, and third waveforms. The fifth, sixth, and seventh waveforms respectively indicate the output intensities of the angular velocity sensors 112 detecting the angular velocity in the x, y, and z directions. The eighth waveform is a composite waveform including the fifth, sixth, and seventh waveforms. The acquiring section 120 acquires waveforms such as the first, second, third, fifth, sixth, and seventh waveforms from the respective sensors 110, and transmits these waveforms to the hold state judging section 130, the walking movement detecting section 140, and the angle information calculating section 160.

Next, the walking movement detecting section 140 judges whether the user is walking (S210). For example, the walking movement detecting section 140 judges whether the user is walking according to whether the output signals from the acceleration sensors fluctuate periodically within a predetermined range. When the user is walking with a substantially constant velocity, acceleration in the progression direction of the user and acceleration in a direction orthogonal to the progression direction occur at substantially constant periods. In this case, acceleration occurs with a period and amplitude corresponding to the height, weight, leg length, gait, and walking velocity of the user, for example, and the acceleration sensors output an oscillation pattern corresponding to the walking of the user by detecting these types of acceleration.

The walking movement detecting section 140 judges whether the user is walking according to a characteristic of a pattern of an output signal, for example. In this case, the walking movement detecting section 140 is connected to the pattern storage section 150 and may compare a characteristic of a pattern read from the pattern storage section 150 to the characteristic of the pattern of the output signal. In this case, the pattern storage section 150 stores in advance a pattern of the output signal occurring when the user is actually walking.

In the example of Fig. 4, the first and second waveforms, which are the output waveforms of the acceleration sensors detecting the acceleration in the x-axis direction and the y-axis direction of the mobile device 10, have output intensities that fluctuate at substantially constant periods during the intervals indicated by the first state and the third state. Furthermore, the second and third waveforms, which are the output waveforms of the acceleration sensors detecting the acceleration in the y-axis direction and the z-axis direction of the mobile device, have output intensities that fluctuate at substantially constant periods during the intervals indicated by the second state. The walking movement detecting section 140 judges that walking of the user has been detected according to the detection of such fluctuation.

If the walking movement detecting section 140 does not detect fluctuation with a substantially constant period such as described above (S310: No), the walking movement detecting section 140 transmits the detection result to the hold state judging section 130 and the offset estimating section 170. The offset estimation apparatus 100 then proceeds to step S300 and returns to acquiring the output signals with the acquiring section 120. Specifically, until detecting the state in which the user is walking, the offset estimation apparatus 100 repeats the acquisition of the output signals with the acquiring section 120. In this case, the hold state judging section 130 and the offset estimating section 170 need not respectively perform the hold state judgment operation and the offset estimation operation.

When the walking movement detecting section 140 detects walking of the user (S310: Yes), the hold state judging section 130 judges the hold state of the mobile device 10 (S320). Specifically, the hold state judging section 130 judges the hold state of the mobile device 10 on a condition that it has been determined that the user is walking.

Instead of this, the hold state judging section 130 may judge the hold state of the mobile device 10 in parallel with the judgment operation of the walking movement detecting section 140. In this case, the hold state judging section 130 sequentially performs the judgment for a predetermined interval of the output signals received from the acquiring section 120, and transmits to the offset estimating section 170 the judgment result at the timing at which the judgement result indicating that the walking movement detecting section 140 has judged the user to be walking is received. In other words, the hold state judging section 130 judges the hold state of the mobile device 10 based on the output signals at a timing when the user is walking.

The pattern storage section 150 stores, in association with each other, a plurality of hold states and reference characteristic amounts obtained by performing a predetermined computation on the output signals that accompany the walking of the user sampled in advance for the respective hold states. Here, characteristic amounts including at least one of the average and the variance of at least a portion of the plurality of axial direction components contained in the output signals are used as the reference characteristic amounts.

As another example, in a case where the plurality of sensors 110 include a first sensor detecting a first physical amount and a second sensor detecting a second physical amount that is of a different type than the first physical amount, the reference characteristic amounts are characteristic amounts corresponding to at least one axial direction component in the output signal of the first sensor and at least one axial direction component in the output signal of the second sensor, for example. In this way, by using reference characteristic amounts based on a plurality of physical amounts, it is possible to improve the accuracy of the hold state judgment and more specifically judge the hold state. Examples of the first sensor and the second sensor can include angular velocity sensors, acceleration sensors, geomagnetic sensors, and the like.

The predetermined computation is not particularly limited as long as it is a computation through which the reference characteristic amounts described above are obtained, and may be a computation that includes weighting the output signals of the plurality of sensors 110 with weighting coefficients obtained as the results of a principal component analyses performed on the output signals sampled in advance for each of the hold states.

Instead, the pattern storage section 150 may store the plurality of hold states and a relationship between two or more axial direction components from among the plurality of axial direction components obtained when the output signal accompanying the direction of the user sampled in advance for each of the hold states is separated into the plurality of axial direction components.

As another example, in a case where the plurality of sensors 110 include a first sensor detecting a first physical amount and a second sensor detecting a second physical amount that is of a different type than the first physical amount, the pattern storage section 150 may store the relationship between at least one axial direction component of the output signal of the first sensor and at least one axial direction component of the output signal of the second sensor. In this way, by using a relationship based on a plurality of physical amounts, it is possible to improve the accuracy of the hold state judgment and more specifically judge the hold state. Examples of the first sensor and the second sensor can include angular velocity sensors, acceleration sensors, geomagnetic sensors, and the like.

The hold state judging section 130 judges the hold state of the mobile device 10 based on the output signal of a sensor 110 acquired by the acquiring section 120 and the output of the pattern storage section 150. More specifically, the hold state judging section 130 calculates a characteristic amount by performing, on the output signal of the sensor 110 acquired by the acquiring section 120, a computation that is the same type as the predetermined computation performed by the pattern storage section 150, and judges the hold state of the mobile device 10 based on which reference characteristic amount stored in the pattern storage section 150 this calculated characteristic amount corresponds to.

The computation performed by the hold state judging section 130 may be a computation that includes weighting the output signals of the plurality of sensors 110 with weighting coefficients obtained as the results of a principal component analysis performed on the output signals sampled in advance for each of the hold states. It should be noted that it is not necessary to use the exact same coefficient as the weighting coefficient obtained as the result of the principal component analysis, and a slight adjustment coefficient that changes the coefficient by a small amount, for example, may be added to the coefficient.

Instead, the hold state judging section 130 may judge the hold state of the mobile device 10 based on the relationship between two or more axial direction components among the plurality of axial direction components when the output signal of the sensor 110 accompanying the walking of the user is separated into the plurality of axial direction components.

As another example, in a case where the plurality of sensors 110 include a first sensor detecting a first physical amount and a second sensor detecting a second physical amount that is of a different type than the first physical amount, the hold state judging section 130 may judge the hold state of the mobile device 10 based on the relationship between at least one axial direction component of the output signal of the first sensor and at least one axial direction component of the output signal of the second sensor. In this way, by using a relationship based on a plurality of physical amounts, it is possible to improve the accuracy of the hold state judgment and more specifically judge the hold state.

Examples of the first sensor and the second sensor can include angular velocity sensors, acceleration sensors, geomagnetic sensors, and the like. As another example, the hold state judging section 130 judges the category of a hold state of the mobile device 10 based on change patterns of the plurality of axial direction components of the output signal. Here, the hold state judging section 130 judges the hold state of the mobile device 10 according to the waveform pattern in a predetermined interval of the output signal, for example.

For example, the hold state judging section 130 sets the predetermined interval Δt to be n times a fluctuation period of the output signal that is to be detected for the walking of the user, where n is an integer greater than or equal to 1. Instead, the hold state judging section 130 may set the interval to be approximately n times an average value of each fluctuation period detected for the walking of a plurality of users.

The hold state judging section 130 judges the hold state of the mobile device 10 based on the relationship between two or more axial direction components from among the plurality of axial direction components of acceleration and/or angular velocity detected by the sensors 110. For example, in the first state of Fig. 4, the hold state judging section 130 judges the hold state of the mobile device 10 according to the first waveform and second waveform having output intensities that fluctuate with a substantially constant period, the fluctuation of the third waveform being less than the fluctuation of the first waveform and the second waveform, or fluctuation of the fifth, sixth, and seventh waveforms that are the angular velocity detection results not being detected. In this case, the hold state judging section 130 judges that the x-axis direction and the y-axis direction of the mobile device 10 corresponding to the first waveform and the second waveform are substantially parallel to the progression direction of the user and the vertical direction that is the upright direction of the user, respectively, and judges that the user is holding the mobile device 10 up to the ear.

Furthermore, in the second state of Fig. 4, the hold state judging section 130 may judge the hold state of the mobile device 10 according to the second waveform and the third waveform having output intensities that fluctuate with a substantially constant period, the fluctuation of the first waveform being less than the second waveform and the third waveform, or fluctuation of the fifth, sixth, and seventh waveforms not being detected. In this case, the hold state judging section 130 judges that the y-axis direction and the z-axis direction of the mobile device 10 are substantially parallel to the progression direction of the user and the vertical direction that is the upright direction of the user, respectively, and judge that the user is holding the mobile device 10 in the hand while viewing the display screen.

In the third state of Fig. 4, the hold state judging section 130 judges the hold state of the mobile device 10 according to the first waveform and second waveform having output intensities that fluctuate with a substantially constant period, the fluctuation of the third waveform being less than the fluctuation of the first waveform and the second waveform, or the seventh waveform having an output intensity that fluctuates at a substantially constant period. In this case, the hold state judging section 130 judges that the x-axis direction and the y-axis direction of the mobile device 10 are respectively substantially parallel to the progression direction of the user and the vertical direction that is the upright direction of the user and that angular velocity is being added to the x-axis direction with a constant period, and judges that the user is holding the mobile device 10 in the hand while swinging the arm.

In this way, the hold state judging section 130 may judge the hold state of the mobile device 10 based on the change pattern of a plurality of components that include at least one axial direction component of a first output signal from the first sensor that detects the first physical amount for at least one axial direction and at least one axial direction component of a second output signal from the second sensor that detects the second physical amount differing from the first physical amount for at least one axial direction. Furthermore, the hold state judging section 130 may judge the hold state based on the detection results of three or more types of physical amounts. In this way, by judging the hold state based on a plurality of physical amounts, the hold state judging section 130 can judge more complicated hold states of the mobile device 10.

The hold state judging section 130 judges the hold state of the mobile device 10 according to the patterns of the output signals of the plurality of sensors 110. Here, the hold state judging section 130 may judge which of a plurality of hold states an output signal corresponds to, based on information stored in the pattern storage section 150. In this case, for example, the pattern storage section 150 stores the patterns of output signals corresponding to hold states of the mobile device 10, and the hold state judging section 130 compares the pattern of the output signal to the stored patterns and, in response to finding a matching pattern, sets the corresponding hold state as the judgment result.

Instead, the hold state judging section 130 may judge the hold state of the mobile device 10 based on which reference characteristic amount stored in the pattern storage section 150 the characteristic amount acquired from the output signal corresponds to. Specifically, the pattern storage section 150 stores a result obtained by performing a principal component analysis on an average value, variance, fluctuation amplitude, or period of the output signal corresponding to the hold state of the mobile device 10 as a reference characteristic amount, for example. In this case, the characteristic amount correspondence judging section 134 compares the characteristic amount calculated by the calculating section 132 to the reference characteristic amounts of the stored patterns and, in response to the characteristic amount matching a reference characteristic amount within a predetermined range, sets the corresponding hold state as the judgment result. At predetermined intervals Δt, the characteristic amount correspondence judging section 134 judges the hold state of the mobile device 10 and transmits the judgment result to the control section 180.

The output signals from the sensors 110 that accompany the walking movement of the user differ greatly for each hold state of the mobile device 10. Utilizing this fact, the hold state judging section 130 may judge the hold state of the mobile device 10 based on the output signals at a timing at which the user is walking, from among the output signals of the sensors 110 acquired by the acquiring section 120, or may judge the hold state of the mobile device 10 without substantially using the output signals at timings when the user is not walking, from among the output signals of the sensors 110 acquired by the acquiring section 120.

By using the sensor output signals obtained when the user is walking, it is possible to improve the accuracy of the hold state judgment and to judge the hold state in detail. Here, the phrase "without substantially using the output signals at timings when the user is not walking" means, in addition to not using signals obtained at a timing when the user is not walking, using output signals at a timing when the user is walking but significantly reducing the effect and/or impact of these signals.

Next, the offset estimating section 170 estimates the offset of the angular velocity sensor 112 according to the change in the angle information in a period having a periodic change pattern, in the angle information received from the angle information calculating section 160 (S330). There are cases where fluctuation of the output signal of an angular velocity sensor 112 is relatively small compared to the fluctuation of an acceleration sensor, such as shown by the fifth, sixth, and seventh waveforms in the first state and second state of Fig. 4. In such a case, judging whether there is periodic change that accompanies the walking of the user based on the output signal of the angular velocity sensor 112 is relatively more difficult than making this judgment based on the output signal of the acceleration sensor.

However, as shown in the eighth waveform of Fig. 4, for example, the composite waveform including the fifth, sixth, and seventh waveforms is understood to include periodic fluctuation that accompanies the walking of the user. In other words, even when the fluctuation width of an output signal is small, it is easy to judge whether there is periodic fluctuation by accumulating the signal components. Therefore, the angle information calculating section 160 calculates the angle information by performing a time integration on the output signals of the angular velocity sensors and the offset estimating section 170 judges whether there is a periodic change pattern in this angle information.

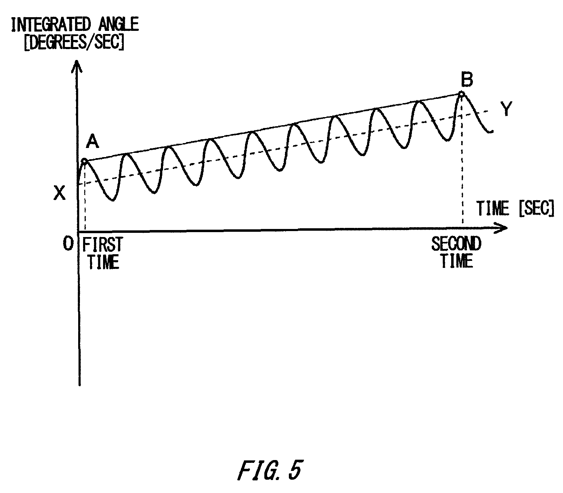

Fig. 5 shows an example in which the time integration is performed on the output signal of an angular velocity sensor 112 of the mobile device 10 according to the present embodiment. The horizontal axis in Fig. 5 indicates time and the vertical axis indicates the integrated angle obtained by performing a time integration on the output signal of the angular velocity sensor 112. As shown in the example of Fig. 5, the waveform of the angle information obtained by performing the time integration on the output signal of the angular velocity sensor 112 is a waveform in which a periodic temporal change pattern and a substantially constant slope are superimposed on each other. Here, the angle information for the period having a periodic change pattern is the angle information calculated from the output signal of the angular velocity sensor 112 caused by the walking movement of the user.

The substantially constant slope corresponding to the dotted line connecting the point X and the point Y in Fig. 5 is the angle information caused by the offset of the angular velocity sensor 112. When the offset of the angular velocity sensor 112 changes over time, this slope also changes over time.

The offset estimating section 170 estimates the offset of the angular velocity sensor 112 according to the angle information at a first time and at a second time, which are different times within the period having the periodic change pattern. Here, the phases of the angle information at the first time and the angle information at the second time are substantially the same phase in the periodic change pattern. For example, the offset estimating section 170 sets the point A in Fig. 5 as the angle information of the first time and sets the point B as the angle information of the second time.

In other words, when there is no component of the slope caused by an offset, the offset estimating section 170 sets two different points on the waveform of the angle information having substantially the same integrated angle to be the angle information of the first time and of the second time. Accordingly, in a case where the offset of the angular velocity sensor 112 is zero, for example, the straight line connecting the point A and the point B is substantially parallel to the time axis through the points integrating substantially the same integrated angle and has a slope of zero. Furthermore, in a case where the angular velocity sensor 112 has a substantially constant offset, the line connecting the point A and the point B passes through points indicating substantially the same phase on the waveform of the angle information, has a slope corresponding to the offset, and intersects with the time axis (X axis) or the integrated angle axis (Y axis).

As an example, the offset estimating section 170 sets the first time to be a time at which the integrated angle is a maximum value, an average value, a minimum value, or the like within one period of the periodic change pattern. Furthermore, the offset estimating section 170 sets the second time to be a time at which the integrated angle is a value that is determined by the first time, from among the maximum value, the average value, the minimum value, and the like, within another period of the periodic change pattern. The point A and the point B in Fig. 5 show examples determined according to the time at which the integrated angle is a maximum value within different periods of the periodic change pattern.

The offset estimating section 170 determines the first time and the second time according to the output of the walking movement detecting section 140. Specifically, the offset estimating section 170 sets the first time and the second time to be times within periods during which the user is performing the walking movement. The periodic temporal change pattern of the angle information is caused by the walking movement of the user, and therefore when the user is not walking, the offset estimating section 170 cannot determine the first time and the second time or determines times that have no meaning. Therefore, by having the offset estimating section 170 determine the first time and the second time in response to the walking movement of the user being detected, it is possible to prevent meaningless operation.

In the example described above, the first time and the second time are determined according to the output of the walking movement detecting section 140. The periodic temporal change pattern of the angle information, the output signal of the angular velocity sensor, and the periodic temporal change pattern of the signal obtained by performing the predetermined signal processing on the output signal of the angular velocity sensor are caused by the walking movement of the user, and therefore the offset estimating section 170 may determine the first time and the second time according to the signal derived from the walking movement of the user. For example, the offset estimating section 170 may determine the first time and the second time according to the timing at which a maximum value or a minimum value of an angular acceleration signal is detected.

Furthermore, the offset estimating section 170 sets a time interval of a number of steps of the user to be the time interval between the first time and the second time. For example, the offset estimating section 170 sets this time interval to be a time interval that is a prescribed constant number of times the walking movement period of the user. The periodic temporal change pattern of the angle information is caused by the walking movement of the user, and therefore the time interval between the first time and the second time is substantially a constant multiple of the walking movement period of the user. Accordingly, if the time interval between the determined first time and second time is not substantially a constant multiple of the walking movement period of the user, for example, the offset estimating section 170 determines this instance to be a mistaken detection and the operation to determine the first time and the second time may be performed again.

The angle information calculating section 160 may include a pattern detecting section that detects the periodic change pattern from the angle information on which the time integration has been performed. For example, the pattern detecting section may perform a Fourier transform or the like to detect whether the angle information includes a periodic signal component. Instead, the pattern detecting section may detect that the angle information includes a periodic signal component in response to an angle value differing from the average value of the angle information occurring repeatedly at a constant interval in the angle information. As another example, instead of the angle information on which the time integration has been performed, the pattern detecting section may detect the periodic change pattern from the output signal of the angular velocity sensor 112 received from the acquiring section 120.

The pattern detecting section transmits the detection result to the offset estimating section 170. In this case, the offset estimating section 170 determines the first time and the second time in response to the pattern detecting section detecting a periodic change pattern.

The periodic temporal change pattern of the angle information is enhanced by performing the time integration on the output signal of the angular velocity sensor 112, and therefore when the offset is stable over time, the offset estimating section 170 sets the time interval between the first time and the second time to be substantially 4 times the walking movement period of the user, preferably 10 times the walking movement period of the user, and more preferably 20 times the walking movement period of the user. In this way, the offset estimating section 170 can decrease the error in the offset estimation.

In the manner described above, by determining the first time and the second time, the offset estimating section 170 of the present embodiment can acquire a substantially constant slope superimposed on the waveform of the angle information. Therefore, the offset estimating section 170 can estimate the offset of the angular velocity sensor 112 corresponding to this substantially constant slope. Furthermore, the mobile device 10 may correct the offset of the corresponding angular velocity sensor 112 such that the substantially constant slope becomes zero, according to the estimated offset.

More specifically, the offset estimating section 170 may perform this correction by dividing each integrated angle calculated from the output of each axis of the angular velocity sensor between the first time and the second time by the integrated time from the first time to the second time.

The offset estimating section 170 may estimate the offset of each rotational axis of the plurality of the angular velocity sensors 112, and the control section 180 may select the rotational axis corresponding to the judgment result of the hold state judging section 130 and output the offset determination result of the selected rotational axis from the offset estimating section 170. For example, when the user is walking while holding the mobile device 10 in the hand and swinging the arm, the periodic temporal change pattern of the angle information caused by the walking movement and the periodic temporal change pattern caused by the swinging of the arm are superimposed on each other, and therefore it is difficult for the offset estimating section 170 to perform an accurate offset estimation.

In a case where the determination result indicates a hold state for which the offset estimation is difficult, for example, the control section 180 causes the previous estimation result to be output without outputting the estimation result of the offset estimating section 170. Furthermore, even when the user is walking while holding the mobile device 10 in the hand and swinging the arm, if there is a rotational axis in a direction perpendicular to the plane in which the arm is swinging, it is difficult for a periodic temporal change pattern to occur as the result of the arm swinging in this rotational axis direction. Therefore, according to the judgment result for the hold state, the control section 180 may select the rotational axis that is expected to not increase the error, and cause the offset estimation result of the selected rotational axis to be output from the offset estimating section 170.

The offset estimating section 170 may determine whether the periodic temporal change pattern between the first time and the second time is disturbed by using one or more pieces of information including the output signal of an angular velocity sensor between the first time and the second time, the angle information resulting from the time integration and calculated form the output signal of an angular velocity sensor, the signal obtained by performing the predetermined signal processing on the output signal of an angular velocity sensor, and the signal based on the angular velocity of each period in the periodic temporal change pattern. When it is determined that the temporal change pattern is disturbed, the offset estimating section 170 may refrain from performing the offset estimation or determine that the reliability of the estimated offset is low and remove the estimation result.

The offset estimating section 170 may compare the estimated result to a result estimated at a time before the second time. For example, in a case where the average value of the held estimation results is different from the newest estimation result by an amount greater than or equal to a predetermined threshold value, the offset estimating section 170 may determine that this estimation result has low reliability and remove this estimation result. Furthermore, the offset estimating section 170 may determine which of the newest estimation result and the immediately prior estimation result is the optimal estimation result, as the estimation result, based on the newest estimation result and the immediately prior estimation result and on the respectively corresponding output signal of the angular velocity sensor, angle information resulting from the time integration and calculated form the output signal of an angular velocity sensor, signal obtained by performing the predetermined signal processing on the output signal of an angular velocity sensor, and signal based on the angular velocity of each period in the periodic temporal change pattern. It is clear that the technique for acquiring the difference between the newest estimation result and the average value of the past estimation results described above may be any technique that can be used to acquire the reliability of an estimated result, such as using a variance value, for example.

The control section 180 may detect the period in which the hold state of the mobile device 10 does not change, according to the judgment result of the hold state judging section 130, and cause the offset estimating section 170 to estimate the offset of the angular velocity sensor 112 based on the output signal of the angular velocity sensor 112 during this period. Specifically, the control section 180 may stop the offset estimation or remove the estimation results during the period between the first state and the second state and the period between the second state and the third state in Fig. 4, for example, which are periods during which the offset estimation error is large. As a result, the control section 180 can decrease the estimation error by performing the offset estimation in a constant hold state.

With the offset estimation apparatus 100 according to the present embodiment described above, it is possible to select the rotational axis direction for which the offset is to be estimated according to the hold state of the mobile device 10, and to estimate the offset of the angular velocity sensor 112 corresponding to the selected rotational axis direction. In this way, the offset estimation apparatus 100 can reduce the effect of output fluctuation of the angular velocity sensor 112 and estimate the offset accurately in a short time, even when the user is walking and the mobile device 10 held in the hand is not in a still state. Accordingly, even when the offset of the angular velocity sensor 112 changes over time, the offset estimation apparatus 100 can periodically estimate the offset and prevent a decrease in the estimation accuracy of this angular velocity sensor 112.

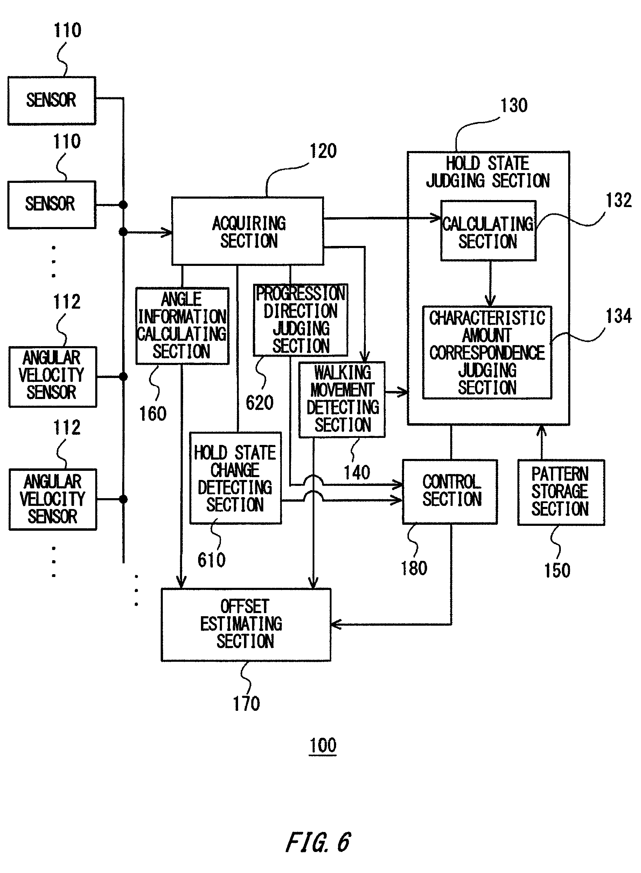

Fig. 6 shows a first modification of the offset estimation apparatus 100 according to the present embodiment. In the offset estimation apparatus 100 of the present embodiment, components that have substantially the same operation as those of the offset estimation apparatus 100 according to the embodiment shown in Fig. 2 are given the same reference numerals and redundant descriptions are omitted. The offset estimation apparatus 100 of the present modification includes a hold state change detecting section 610 and a progression direction judging section 620.

The hold state change detecting section 610 is connected to the acquiring section 120 and detects change in the hold state of the mobile device 10 from the output signals of the plurality of sensors 110. Specifically, the hold state change detecting section 610 does not judge the actual hold state of the mobile device 10 in the manner of the hold state judging section 130, but instead detects that there is a change in the hold state. For example, the hold state change detecting section 610 detects fluctuation in the output signals caused by change in the hold state, as seen in the period between the first state and the second state and the period between the second state and the third state in Fig. 4.

In this case, the hold state change detecting section 610 detects fluctuation of the output signals based on whether there is fluctuation that exceeds a predetermined threshold value range. Instead, the hold state change detecting section 610 may sequentially store the output signals, and detect fluctuation in the output signals by comparing the output signal received from the acquiring section 120 to an output signal received in the past that has been stored. The hold state change detecting section 610 transmits the detected change of the hold state to the control section 180.

The control section 180 controls whether the offset estimating section 170 estimates the offset of an angular velocity sensor 112, according to the detection result of the hold state change detecting section 610. For example, the control section 180 stops the offset estimation of the offset estimating section 170 during a period in which the hold state changes. The control section 180 may cause the offset estimated by the offset estimating section 170 before the hold state changes to be output from the offset estimating section 170 during a period in which the hold state changes.

During a period in which the hold state changes, the angular velocity sensor 112 outputs a signal in which the fluctuation of the output signal caused by change of the hold state and fluctuation of the output signal caused by the walking movement of the user are superimposed on each other. Even when information of an integrated angle corresponding to such an output signal is received, the offset estimating section 170 has difficulty isolating the signal component caused by the walking movement of the user, and therefore the control section 180 stops the offset estimation operation during this period in order to prevent worsening of the estimation error.

The control section 180 may detect the period during which the hold state of the mobile device 10 does not change, according to the detection result of the hold state change detecting section 610, and cause the offset estimating section 170 to estimate the offset of the angular velocity sensor 112 based on the output signal of the angular velocity sensor 112 during this period. In this way, the offset estimating section 170 can perform an offset estimation with high accuracy, since the offset can be estimated based on a signal that does not have the change of the output signal caused by the change in the hold state superimposed thereon.

The progression direction judging section 620 judges the progression direction of the user. The progression direction judging section 620 is connected to the acquiring section 120 and judges whether the user is progressing straight, based on the output signals of the plurality of sensors 110. For example, when the output signal of an acceleration sensor fluctuates with a substantially constant period and the fluctuation of the output signal of an angular velocity sensor 112 is less than a predetermined threshold value, the progression direction judging section 620 judges that the user is progressing straight. The progression direction judging section 620 transmits the judgment result to the control section 180. Here, an example is described in which the progression direction judging section 620 judges that the user is progressing straight when the fluctuation of the output signal of an angular velocity sensor 112 is less than a predetermined threshold value, but instead of this or in addition to this, the judgment may be made in the manner described below.

When the difference between the output signal of an angular velocity sensor and a signal resulting from passing the output signal of an angular velocity sensor 112 through a low pass filter, or a signal resulting from applying signal processing to realize an equivalent effect, is less than or equal to a predetermined threshold value, for example, the progression direction judging section 620 judges that the user is progressing straight. Furthermore, it is also possible for the progression direction judging section 620 to judge that the user is progressing straight when a time-integrated angle is calculated for a predetermined period of a periodic pattern of the output signal of an angular velocity sensor 112 and the calculated integrated angle is less than or equal to a predetermined threshold value.

As another means, the progression direction judging section 620 may use a technique to determine whether the user is progressing straight between the first time and the second time based on the walking trajectory of the user using a map matching technique, or may use a technique to determine whether the user is progressing straight based on the walking trajectory of the user obtained using another positioning means such as GPS or WiFi positioning. Furthermore, the progression direction judging section 620 may determine whether the user is progressing straight between the first time and the second time by using a magnetic sensor or the like.

The control section 180 detects the period during which the progression direction of the user is the straight progression direction, according to the judgment result of the progression direction judging section 620, and causes the offset estimating section 170 to estimate the offset of the angular velocity sensor 112 based on the output signal of the angular velocity sensor 112 during this period. During a period in which the progression direction of the user who is walking changes, the angular velocity sensor 112 outputs a signal that includes fluctuation of the output signal caused by the change in the progression direction and fluctuation of the output signal caused by the walking movement of the user superimposed thereon.

Even when information of the integrated angle corresponding to the such an output signal is received, the offset estimating section 170 has difficult isolating the signal component caused by the walking movement of the user, and therefore the control section 180 causes the offset estimating section 170 to perform the offset estimation on the condition that the user is progressing straight. Therefore, the offset estimating section 170 can estimate the offset based on a signal that does not have the fluctuation of the output signal caused by the change in the progression of the user superimposed thereon, and can therefor perform the offset estimation with high accuracy.

Furthermore, the control section 180 causes the offset estimating section 170 to estimate the offset of the angular velocity sensor 112 according to the calculated angle information, without using some or all of the output signal output from the angular velocity sensor 112 during the period in which the progression direction of the user is not the straight progression direction. In this case, the control section 180 may stop the offset estimation operation during the period in which the progression direction of the user is not the straight progression direction, to prevent worsening of the estimation error of the offset estimating section 170. The control section 180 may cause the offset estimated by the offset estimating section 170 before the change in the progression direction to be output from the offset estimating section 170 during the period in which the progression direction changes.

The offset estimation apparatus 100 of the present modification described above determines whether to perform the offset estimation according to the detection result of the progression direction of the user or the change in the hold state. In this way, the offset estimation apparatus 100 can perform the offset estimation with higher accuracy.

The offset estimation apparatus 100 of the present modification described above can easily determine whether there is periodic fluctuation by performing a time integration of the output signal of an angular velocity sensor 112, even when the output from the angular velocity sensor 112 is small relative to the fluctuation of the acceleration sensors. Here, there are cases where the angular velocity sensor 112 outputs fluctuation that is sufficient for determining whether there is periodic fluctuation, depending on the state in which the user is walking. In such a case, the offset estimation apparatus 100 may determine whether there is periodic fluctuation by using the fluctuation of the output signal of the angular velocity sensor 112, i.e. without performing a time integration of the output signal.

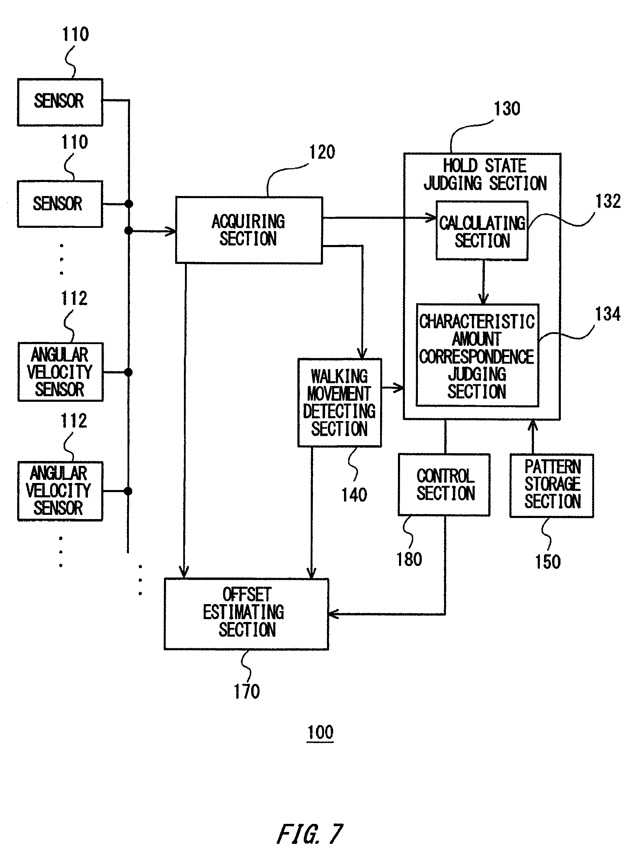

Fig. 7 shows a second modification of the offset estimation apparatus 100 according to the present embodiment. In the offset estimation apparatus 100 of the present embodiment, components that have substantially the same operation as those of the offset estimation apparatus 100 according to the embodiment shown in Fig. 2 are given the same reference numerals and redundant descriptions are omitted. The offset estimation apparatus 100 of the present modification has a configuration achieved by removing the angle information calculating section 160 from the offset estimation apparatus 100 according to the present embodiment shown in Fig. 2.

Specifically, the offset estimating section 170 of the present modification is connected to the acquiring section 120, and estimates the offset of an angular velocity sensor 112 according to the change in the output signal of this angular velocity sensor 112. In this case, when the fluctuation of the output signal of the angular velocity sensor 112 is small relative to the fluctuation of the acceleration sensor, for example, the offset estimating section 170 can determine whether the fluctuation of the angular velocity sensor 112 includes periodic fluctuation by performing signal processing such as using a low pass filter.

More specifically, the offset estimating section 170 estimates the offset of the angular velocity sensor 112 based on a first AC component included in the output signal of the angular velocity sensor 112 in the period during which the level of the first AC component cycles. In this case, the offset estimating section 170 may estimate the offset of the angular velocity sensor 112 according to the level of the first AC component in the period during which the level of the first AC component cycles.

Here, the AC component refers to the cycling of the level, the rippling, and the fluctuation of the output corresponding to the walking movement and/or motion of the user holding the mobile device 10, for example, and excludes thermal noise and the like of the angular velocity sensor 112. Furthermore, the cycling of the level refers to a situation in which, when the voltage level is fluctuating, the voltage passes through a predetermined voltage level and then returns again to the predetermined voltage level.

As an example, during one period of the periodic change pattern of the output signal of the angular velocity sensor 112, i.e. during one cycle of the output level, the offset estimating section 170 sets the first time to be a time at which the a predetermined value, e.g. a maximum value, average value, or minimum value, is realized. In the next period of the periodic pattern, the offset estimating section 170 may set the second time to be a time at which the output signal of the angular velocity sensor 112 is this predetermined value, i.e. the voltage level used to determine the first time. In this case, the offset estimating section 170 may determine the first time and the second time after performing signal processing, such as using a low pass filter, on the output signal of the angular velocity sensor 112.

The output signal of the angular velocity sensor and the periodic temporal change pattern of a signal obtained by applying the predetermined signal processing to the output signal of the angular velocity sensor, for example, are caused by the walking movement of the user, and therefore the offset estimating section 170 may determine the first time and the second time according to a signal derived from the walking movement of the user in this manner. Furthermore, the offset estimating section 170 may determine the first time and the second time according to the timing at which the maximum value or the minimum value of the angular acceleration signal is detected.

The offset estimating section 170 can estimate the offset of the angular velocity sensor 112 by dividing the integrated value obtained by integrating each output of each axis of the angular velocity sensor 112 between the first time and the second time by the time over which the integration was performed or the number of integrated points. Instead, the offset estimating section 170 may estimate the offset of the angular velocity sensor 112 by calculating the angular acceleration corresponding to the output of each axis of the angular velocity sensor 112 between the first time and the second time and dividing the result by the number of integrated points or the time interval used in the calculation.

The offset estimating section 170 may calculate the average level of the first AC component in the period during which the level of the first AC component cycles, to estimate the offset of the angular velocity sensor 112. For example, the offset estimating section 170 estimates the offset of the angular velocity sensor 112 by calculating the average level from a first peak to a second peak of the first AC component. Here, the first peak and the second peak may respectively be highest values or lowest values of the first AC component.

The second modification of the offset estimation apparatus 100 according to the present embodiment describes an example in which the output signal of the angular velocity sensor 112 includes a first AC component. Here, integrating the first AC component results in the angle information output by the angular velocity sensor 112. In other words, the angle information calculating section 160 of the offset estimation apparatus 100 according to the present embodiment described in Figs. 2 and 6 calculates the angle information to be the level of a second AC component obtained by integrating the first AC component.

In other words, the first AC component or the second AC component is a component in synchronization with the movement of the user. Furthermore, the first AC component or the second AC component is a component in synchronization with the walking movement of the user.

Accordingly, in this case, the offset estimating section 170 estimates the offset of the angular velocity sensor 112 according to the level of the second AC component obtained by integrating the first AC component over the period in which the level of the first AC component cycles. In other words, the offset estimating section 170 estimates the offset from the change amount of the angle information in the period during which the level of the second AC component cycles, for example.

More specifically, the offset estimating section 170 estimates the offset from the difference from a first level at which the second AC component has a first peak to a second level at which the second AC component has a second peak, in the angle information. Here, the first peak and the second peak may respectively be highest values or lowest values of the second AC component.

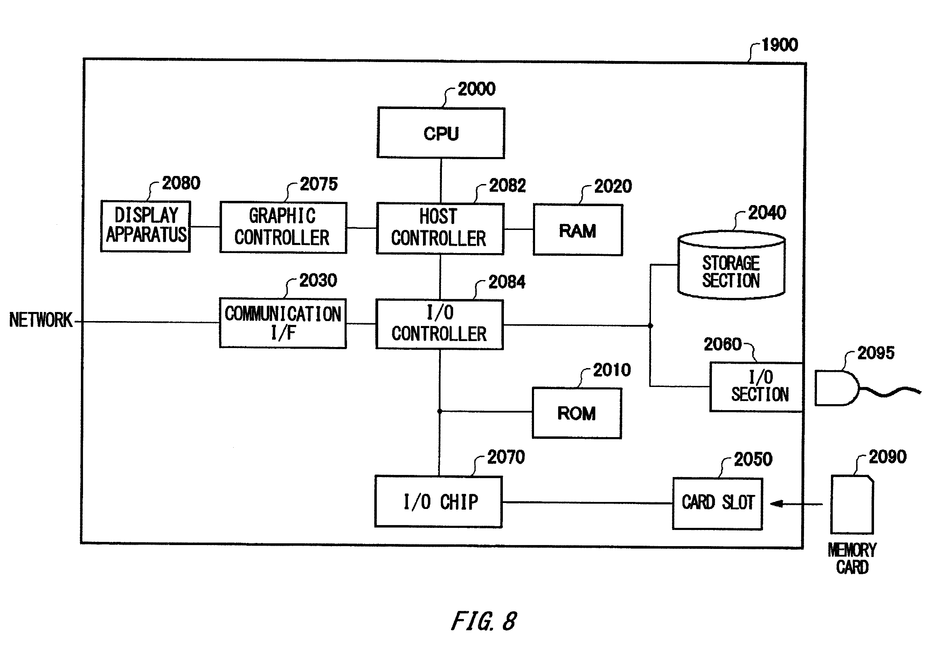

Fig. 8 shows an example of a hardware configuration of a computer 1900 functioning as the offset estimation apparatus 100 according to the present embodiment. The computer 1900 according to the present embodiment is mounted in the mobile device 10, for example. Instead, the computer 1900 may be provided outside the mobile device 10, receive output from a sensor of the mobile device 10, and transmit an offset estimation result or the like to the mobile device 10. In this case, the computer 1900 may communicate wirelessly with the mobile device 10, for example.

The computer 1900 is provided with a CPU peripheral including a CPU 2000, a RAM 2020, a graphic controller 2075, and a display apparatus 2080, all of which are connected to each other by a host controller 2082; a communication interface 2030, a storage section 2040, and an input/output section 2060, all of which are connected to the host controller 2082 by an input/output controller 2084; a ROM 2010; a card slot 2050; and an input/output chip 2070.

The host controller 2082 is connected to the RAM 2020 and is also connected to the CPU 2000 and graphic controller 2075 accessing the RAM 2020 at a high transfer rate. The CPU 2000 operates to control each section based on programs stored in the ROM 2010 and the RAM 2020. The graphic controller 2075 acquires image data generated by the CPU 2000 or the like on a frame buffer disposed inside the RAM 2020 and displays the image data in the display apparatus 2080. Instead, the graphic controller 2075 may internally include the frame buffer storing the image data generated by the CPU 2000 or the like.

The input/output controller 2084 connects the communication interface 2030 serving as a relatively high velocity input/output apparatus, and the storage section 2040, and the input/output section 2060 to the host controller 2082. The communication interface 2030 communicates with other apparatuses via a network. The storage section 2040 stores the programs and data used by the CPU 2000 housed in the computer 1900. The storage section 2040 is a non-volatile memory and may be a flash memory or hard disk, for example.

The input/output section 2060 is connected to the connector 2095, sends and receives programs or data to and from the outside, and provides the programs or data to the storage section 2040 via the RAM 2020. The input/output section 2060 may communicate with the outside using a standardized connector and communication method, and in this case the input/output section 2060 may use a standard such as USB, IEEE 1394, HDMI (Registered Trademark), or Thunderbolt (Registered Trademark). The input/output section 2060 may communicate with the outside used a wireless communication standard such as Bluetooth (Registered Trademark).

Furthermore, the input/output controller 2084 is connected to the ROM 2010, and is also connected to the card slot 2050 and the input/output chip 2070 serving as a relatively high velocity input/output apparatus. The ROM 2010 stores a boot program performed when the computer 1900 starts up, a program relying on the hardware of the computer 1900, and the like. The card slot 2050 reads programs or data from a memory card 2090 and supplies the read information to the storage section 2040 via the RAM 2020. The input/output chip 2070 connects the card slot 2050 to the input/output controller 2084 along with each of the input/output apparatuses via, a parallel port, a serial port, a keyboard port, a mouse port, or the like.

The programs provided to the storage section 2040 via the RAM 2020 are provided by a user through the input/output section 2060 or by being stored in a storage medium, such as the memory card 2090. The programs are read from storage medium, installed in the storage section 2040 inside the computer 1900 via the RAM 2020, and performed by the CPU 2000.

The programs are installed in the computer 1900 and cause the computer 1900 to function as the acquiring section 120, the hold state judging section 130, the walking movement detecting section 140, the pattern storage section 150, the angle information calculating section 160, the offset estimating section 170, the control section 180, the hold state change detecting section 610, and the progression direction judging section 620.

The information processes recorded in the programs are read by the computer 1900 to cause the computer 1900 to function as software and hardware described above, which are exemplified by the specific sections of the acquiring section 120, the hold state judging section 130, the walking movement detecting section 140, the pattern storage section 150, the angle information calculating section 160, the offset estimating section 170, the control section 180, the hold state change detecting section 610, and the progression direction judging section 620. With these specific sections, a unique offset estimation apparatus 100 suitable for an intended use can be configured by realizing the calculations or computations appropriate for the intended use of the computer 1900 of the present embodiment.

For example, if there is communication between the computer 1900 and an external apparatus or the like, the CPU 2000 performs the communication program loaded in the RAM 2020, and provides the communication interface 2030 with communication processing instructions based on the content of the process recorded in the communication program. The communication interface 2030 is controlled by the CPU 2000 to read the transmission data stored in the RAM 2020, the storage section 2040, the memory card 2090, or a transmission buffer region provided to a storage apparatus or the like connected via the input/output section 2060, and send this transmission data to the network, and to write data received from the network onto a reception buffer area on the storage apparatus. In this way, the communication interface 2030 may transmit data to and from the storage apparatus through DMA (Direct Memory Access). As another possibility, the CPU 2000 may transmit the data by reading the data from the storage apparatus or communication interface 2030 that are the origins of the transmitted data, and writing the data onto the communication interface 2030 or the storage apparatus that are the transmission destinations.

The CPU 2000 may perform various processes on the data in the RAM 2020 by reading into the RAM 2020, through DMA transmission or the like, all or a necessary portion of the database or files stored in the external apparatus such as the storage section 2040, the input/output section 2060, or the memory card 2090. The CPU 2000 writes the processed data back to the external apparatus through DMA transmission or the like. In this process, the RAM 2020 is considered to be a section that temporarily stores the content of the external storage apparatus, and therefore the RAM 2020, the external apparatus, and the like in the present embodiment are referred to as a memory, a storage section, and a storage apparatus. The variety of information in the present embodiment, such as the variety of programs, data, tables, databases, and the like are stored on the storage apparatus to become the target of the information processing. The CPU 2000 can hold a portion of the RAM 2020 in a cache memory and read from or write to the cache memory. With such a configuration as well, the cache memory serves part of the function of the RAM 2020, and therefore the cache memory is also included with the RAM 2020, the memory, and/or the storage apparatus in the present invention, except when a distinction is made.

The CPU 2000 executes the various processes such as the computation, information processing, condition judgment, searching for/replacing information, and the like included in the present embodiment for the data read from the RAM 2020, as designated by the command sequence of the program, and writes the result back onto the RAM 2020. For example, when performing condition judgment, the CPU 2000 judges whether a variable of any type shown in the present embodiment fulfills a condition of being greater than, less than, no greater than, no less than, or equal to another variable or constant. If the condition is fulfilled, or unfulfilled, depending on the circumstances, the CPU 2000 branches into a different command sequence or acquires a subroutine.

The CPU 2000 can search for information stored in a file in the storage apparatus, the database, and the like. For example, if a plurality of entries associated respectively with a first type of value and a second type of value are stored in the storage apparatus, the CPU 2000 can search for entries fulfilling a condition designated by the first type of value from among the plurality of entries stored in the storage apparatus. The CPU 2000 can then obtain the second type of value associated with the first type of value fulfilling the predetermined condition by reading the second type of value stored at the same entry.

The programs and modules shown above may also be stored in an external storage medium. The memory card 2090, an optical storage medium such as a DVD, Blu-ray (Registered Trademark), or CD, a magneto-optical storage medium, a tape medium, a semiconductor memory such as an IC card, or the like can be used as the storage medium. Furthermore, a storage apparatus such as a hard disk or RAM that is provided with a server system connected to the Internet or a specialized communication network may be used to provide the programs to the computer 1900 via the network.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### [Explanation of Reference Numerals]

10: mobile device; 12: display section; 100: offset estimation apparatus; 110: sensor; 112: angular velocity sensor; 120: acquiring section; 130: hold state judging section; 132: calculating section; 134: characteristic amount correspondence judging section; 140: walking movement detecting section; 150: pattern storage section; 160: angle information calculating section; 170: offset estimating section; 180: control section; 610: hold state change detecting section; 620: progression direction judging section; 1900: computer; 2000: CPU; 2010: ROM; 2020: RAM; 2030: communication interface; 2040: storage section; 2050: card slot; 2060: input/output section; 2070: input/output chip; 2075: graphic controller; 2080: display apparatus; 2082: host controller; 2084: input/output controller; 2090: memory car; 2095: connector

## Claims

1. An offset estimation apparatus comprising:
an acquiring section that acquires an output signal of an angular velocity sensor mounted in a mobile device; and
an offset estimating section that estimates an offset of the angular velocity sensor based on a first AC component included in the output signal of the angular velocity sensor in a period during which a level of the first AC component cycles.

2. The offset estimation apparatus according to Claim 1, wherein
the offset estimating section estimates the offset of the angular velocity sensor according to the level of the first AC component in the period during which the level of the first AC component cycles.

3. The offset estimation apparatus according to Claim 2, wherein
the offset estimating section estimates the offset by calculating an average level of the first AC component in the period during which the level of the first AC component cycles.

4. The offset estimation apparatus according to Claim 3, wherein
the offset estimating section calculates an average level from a first peak to a second peak of the first AC component.

5. The offset estimation apparatus according to Claim 4, wherein
the first peak and the second peak are each a highest value of the first AC component or a lowest value of the first AC component.

6. The offset estimation apparatus according to Claim 1, wherein
the offset estimating section estimates the offset of the angular velocity sensor according to a level of a second AC component obtained by integrating the first AC component in the period during which the level of the first AC component cycles.

7. The offset estimation apparatus according to Claim 6, comprising:
an angle information calculating section that calculates angle information from the output signal of the angular velocity sensor, wherein
the angle information calculating section calculates the second AC component by integrating the first AC component.

8. The offset estimation apparatus according to Claim 7, wherein
the offset estimating section estimates the offset from a change amount of the angle information in a period during which the level of the second AC component cycles.

9. The offset estimation apparatus according to Claim 8, wherein
the offset estimating section estimates the offset from a difference from a first level at which the second AC component has a first peak to a second level at which the second AC component has a second peak, in the angle information.

10. The offset estimation apparatus according to Claim 9, wherein
the first peak and the second peak are each a highest value of the second AC component or a lowest value of the second AC component.

11. The offset estimation apparatus according to Claim 7, wherein
the offset estimating section estimates the offset of the angular velocity sensor according to change of the angle information in a period during which the angle information has a periodic change pattern.

12. The offset estimation apparatus according to Claim 11, wherein
the offset estimating section estimates the offset of the angular velocity sensor according to the angle information at a first time and a second time, which are different times in the period during which there is the periodic change pattern, and
phases of the angle information at the first time and the angle information at the second time are substantially the same phase in the periodic change pattern.

13. The offset estimation apparatus according to Claim 12, wherein
the angle information in the period during which there is the periodic change pattern is angle information calculated from the output signal of the angular velocity sensor during walking movement of a user having the mobile device.

14. The offset estimation apparatus according to Claim 12 or 13, comprising:
a walking movement detecting section that detects the walking movement of a user having the mobile device.

15. The offset estimation apparatus according to Claim 14, wherein
the offset estimating section determines the first time and the second time according to output of the walking movement detecting section.

16. The offset estimation apparatus according to Claim 14 or 15, wherein
the offset estimating section sets a time interval from the first time to the second time to be a time interval of a number of steps of the user.

17. The offset estimation apparatus according to Claim 16, wherein
the offset estimating section sets the time interval of the number of steps of the user to be a time interval that is substantially a constant multiple of a walking movement period of the user.

18. The offset estimation apparatus according to any one of Claims 14 to 17, wherein
the offset estimating section sets the first time and the second time to be times in a period during which the walking movement of the user is performed.

19. The offset estimation apparatus according to any one of Claims 11 to 18, wherein
the angle information calculating section calculates the angle information by performing a time integration on the output signal of the angular velocity sensor.

20. The offset estimation apparatus according to any one of Claims 11 to 19, comprising:
a hold state judging section that judges a hold state of the mobile device; and
a control section that controls whether the offset estimating section estimates the offset of the angular velocity sensor, according to a judgment result of the hold state judging section.

21. The offset estimation apparatus according to Claim 20, wherein
the angular velocity sensor detects angular velocity of a plurality of rotational axes of the mobile device, and
the control section causes the offset estimating section to estimate the offset of the angular velocity sensor according to the judgment result of the hold state judging section.

22. The offset estimation apparatus according to Claim 21, wherein
the offset estimating section estimates the offset of each rotational axis of the angular velocity sensor, and
the control section selects a rotational axis corresponding to the judgment result of the hold state judging section and causes the offset estimation result of the selected rotational axis to be output from the offset estimating section.

23. The offset estimation apparatus according to any one of Claims 20 to 22, wherein
the control section detects a period during which there is no change in the hold state of the mobile device, according to the judgment result of the hold state judging section, and causes the offset estimating section to estimate the offset of the angular velocity sensor based on the output signal of the angular velocity sensor in the period during which there is no change in the hold state of the mobile device.

24. The offset estimation apparatus according to any one of Claims 20 to 22, comprising:
a hold state change detecting section that detects change of the hold state of the mobile device, wherein
the control section controls whether the offset estimating section estimates the offset of the angular velocity sensor, according to a detection result of the hold state change detecting section.

25. The offset estimation apparatus according to Claim 24, wherein
the control section detects a period during which there is no change in the hold state of the mobile device, according to the detection result of the hold state change detecting section, and causes the offset estimating section to estimate the offset of the angular velocity sensor based on the output signal of the angular velocity sensor in the period during which there is no change in the hold state of the mobile device.

26. The offset estimation apparatus according to any one of Claims 20 to 25, comprising:
a progression direction judging section that judges a progression direction of a user, wherein
the control section detects a period during which the progression direction of the user is a straight progression direction, according to a judgment result of the progression direction judging section, and causes the offset estimating section to estimate the offset of the angular velocity sensor based on the output signal of the angular velocity sensor in the period during which the progression direction of the user is a straight progression direction.

27. The offset estimation apparatus according to Claim 26, wherein
the control section causes the offset estimating section to estimate the offset of the angular velocity sensor according to angle information calculated without using some or all of the output signal output from the angular velocity sensor in the period during which the progression direction of the user is not a straight progression direction.

28. The offset estimation apparatus according to any one of Claims 11 to 27, wherein
the angle information calculating section includes a pattern detecting section that detects the periodic change pattern from the angle information.

29. The offset estimation apparatus according to any one of Claims 6 to 28, wherein
the first AC component or the second AC component is a component in synchronization with motion of a user.

30. The offset estimation apparatus according to any one of Claims 6 to 29, wherein
the first AC component or the second AC component is a component in synchronization with walking movement of a user.

31. An offset estimation method comprising:
acquiring an output signal of an angular velocity sensor mounted in a mobile device; and
estimating an offset of the angular velocity sensor based on a first AC component included in the output signal of the angular velocity sensor in a period during which a level of the first AC component cycles.

32. A program that causes a computer to function as the offset estimation apparatus according to any one of Claims 1 to 30.
